(19) **Europäisches Patentamt**
**European Patent Office**
**Office européen des brevets**

(11) **EP 1 389 025 B1**

(12) **EUROPEAN PATENT SPECIFICATION**

(45) Date of publication and mention
of the grant of the patent:
**08.09.2010 Bulletin 2010/36**

(51) Int Cl.:
**H04W 84/08** (2009.01)

(21) Application number: **03102102.5**

(22) Date of filing: **10.07.2003**

(54) **Wireless communication system, unit and method**

Drahtloses Kommunikationssystem ,Kommunikationsgerät und Verfahren

Système de communication portable sans fil, unite de communications et procédé

(84) Designated Contracting States:
**AT BE BG CH CY CZ DE DK EE ES FI FR GB GR HU IE IT LI LU MC NL PT RO SE SI SK TR**

(30) Priority: **10.08.2002 GB 2186443**

(43) Date of publication of application:
**11.02.2004 Bulletin 2004/07**

(73) Proprietor: **MOTOROLA, INC.**
**Schaumburg, IL 60196 (US)**

(72) Inventors:
• **Serfaty, Salomon**
**60951 Doar Gaash (IL)**
• **Shahaf, Mark**
**77462 Ashdod (IL)**
• **Levy, Ofer**
**49408 Petach-Tikva (IL)**

(74) Representative: **McCormack, Derek James et al**
**Optimus Patents Limited**
**Grove House**
**Lutyens Close**
**Chineham Court**
**Basingstoke, Hampshire RG24 8AG (GB)**

(56) References cited:
**WO-A-96/13914      GB-A- 2 309 854**
**US-A- 6 052 557**

• **VALENTINE S: "CHANNEL CONTENTION SOLUTION FOR TETRA DIRECT MODE DM GATEWAY" MOTOROLA TECHNICAL DEVELOPMENTS, MOTOROLA INC. SCHAUMBURG, ILLINOIS, US, vol. 41, May 2000 (2000-05), pages 79-81, XP001096659 ISSN: 0887-5286**

**Description**

**Field of the Invention**

This invention relates to a wireless communication system, unit and method. In particular, the invention relates to the avoidance of collisions within a communication resource of a mobile wireless communication system. The invention is applicable to communications between each of a plurality of mobile wireless communications terminals operating in the communication system in a direct operational mode.

**Background of the Invention**

Mobile wireless communication systems, for example cellular telephony or private mobile radio communication systems, typically provide for radio telecommunication links to be arranged between a plurality of subscriber units, often termed 'mobile stations' (MSs). The term 'mobile station' generally includes any wireless subscriber communication unit, including hand-portable and vehicular-mounted radio units.

Wireless communication systems are distinguished over fixed communication systems, such as the public switched telephone network (PSTN), principally in that mobile stations move between communication service areas and providers and in doing so encounter varying radio propagation environments. Therefore the quality of a communication link to/from a subscriber unit varies as the mobile station changes location.

In many cases mobile communications are arranged to take place via a fixed infrastructure including one or more base stations. This is said to be a 'trunked' mode of operation (TMO). In this mode, the infrastructure includes a system controller providing centralised system usage control and timing synchronisation. The controller is able to utilise the system resources to provide multiple contemporaneous communications between different MSs and to avoid collisions between transmissions from unrelated MSs.

In the field of this invention, it is known that modern communication systems and standards targeted to the Professional Radio users and markets (e.g. police and other emergency services) require another operational mode to enable MSs to communicate directly with each other. This mode of operation is similar to the back-to-back operation of conventional half duplex radio schemes used by many existing private mobile radio systems.

This functionality is known as a 'direct mode operation' (DMO) operation. For example, a particular form of operation in such a mode is defined within the TETRA standard. The TETRA (Terrestrial Trunked Radio) standard is a set of operating protocols and specifications defined by the European Telecommunications Institute (ETSI). Thus, DMO is a type of operational mode in which two or more mobile stations (MSs) communicate together without using the a system infrastructure. Hence, when a MS operates in DMO, there is no system controller involved and therefore no centralised timing synchronisation available to avoid collisions between transmissions of unrelated MSs or power control to help minimise interference.

The effective communication range in DMO communications depends on various factors, including: the transmitting power of the MS, communication channel conditions, a number of transmitting users, topography and obstacles in the communications path. When operating in DMO, MSs communicate over dedicated frequencies. A MS operating in DMO may manually select a dedicated frequency or the MS may scan the available dedicated frequencies to find an available frequency based on signal strength measurements. In some direct mode environments there may also be a pool of communication channels available.

In wireless communication systems, particularly unregulated direct communication systems, it is known that transmissions from a number of wireless communication units are subject to collide. Therefore, in the TETRA DMO standard, a mechanism has been introduced to reduce the number of possible collisions. Each MS that intends to use the channel for transmission, e.g. to establish a call, determines the channel state by monitoring the channel for a certain time period, in order to ensure that the channel is not being used for any ongoing communications.

However, the inventors of the present invention have recognised that this mechanism fails to resolve (at least) the following scenario. It is possible that certain MSs are capable of receiving a communication from one of two (or more) other MSs, which are not capable of receiving communications from each other. This scenario is referred as a "terminal in the middle" or "hidden terminal", and is illustrated later.

GB 2,309,854 describes a method of dealing with the hidden terminal problem. MSs that receive a communication from a transmitting terminal periodically transmit a broadcast or beacon signal to indicate to the hidden terminal that they are receiving the communication and that the resource on which the communication is being sent is therefore in use. However, as described later, the present inventors have recognised that there can be collisions between the broadcast signals which may cause the hidden terminal not to be able decode the information in the broadcast signals.

## Summary of the invention

In accordance with a first aspect of the present invention, there is provided a wireless communication system in accordance with claim 1 of the accompanying claims. The communication system includes a plurality of mobile communication units (terminals) that are operable to communicate either directly or via an intermediary communicating unit. Each unit is capable of being configured to operate in DMO as either a primary (master) communication unit or as a secondary (slave) communication unit. The primary unit is the unit that initiates a communication using a communication resource and the secondary unit(s) is (are) the one(s) that receive it. The unit that operates as the primary unit changes according to which unit sends a communication. One or more of the units, preferably all of the units, is operable when participating in a call as a secondary unit to transmit one or more beacon signals during available time periods of the time divided communication resource. In this manner the beacon signal transmissions inform other secondary communication units, which are not participating in the call, that the communication resource is being utilised. In order to reduce the possibility of collisions between the beacon signals from different secondary units, each secondary unit is operable to monitor beacon transmissions from other secondary units receiving the communication, to estimate a rate of beacon transmissions being made from the secondary units, and to increase or reduce its rate of transmitting the beacon signals according to whether the estimated rate is respectively below or above a target rate.

In accordance with a second aspect of the present invention, there is provided a wireless communication terminal in accordance with claim 8 of the accompanying claims.

In accordance with a third aspect of the present invention, there is provided a method according to claim 12 of the accompanying claims. By the method, other wireless communication units, not participating in the call, are informed that the communication resource is utilised.

In summary, secondary or slave units transmit, preferably in a random manner, beacon signals to indicate that they are receiving a communication from a primary or master unit. The rate at which secondary units are transmitting such beacon signals is monitored by each secondary unit and the rate of transmitting the beacon signals is adjusted accordingly so that an adjustment of the rate toward a target rate is made. The target rate is selected so as to improve the probability of a hidden terminal receiving a beacon signal as described later.

In this manner, other secondary units suffering from the problem of being a 'hidden' terminal are able to recognise that a DMO communication is in progress.

Embodiments of the present invention will be described by way of example with reference to the accompanying drawings, in which:

## Brief Description of the Drawings

FIG. 1 shows a block diagram of a known direct mode radio communication system highlighting the problem of a 'hidden' terminal.

FIG. 2 shows a timing diagram illustrating the TETRA timing structure that can be used to facilitate the inventive concepts of a preferred embodiment of the invention;

FIG. 3 shows a block diagram of a subscriber unit adapted to support the inventive concepts of the preferred embodiments of the present invention;

FIG. 4 shows a timing diagram illustrating a timing process implementing one aspect of the preferred embodiment of the invention;

FIG. 5 shows a flowchart of a preferred mechanism for a wireless communication unit in deciding when to transmit signalling beacons, in accordance with a preferred embodiment of the invention;

FIG. 6 illustrates a distribution plot of wireless communication units operating in a direct mode communication system, employing the inventive concepts of the preferred embodiment of the present invention;

FIG. 7 illustrates a graph showing how the overall probability of transmitting in a 'beacon-signalling timeslot' progresses over time for the scenario illustrated in FIG. 6; and

FIG. 8 illustrates simulation results of a direct mode communication system employing the inventive concepts of the present invention.

**Detailed description of embodiments of the present invention**

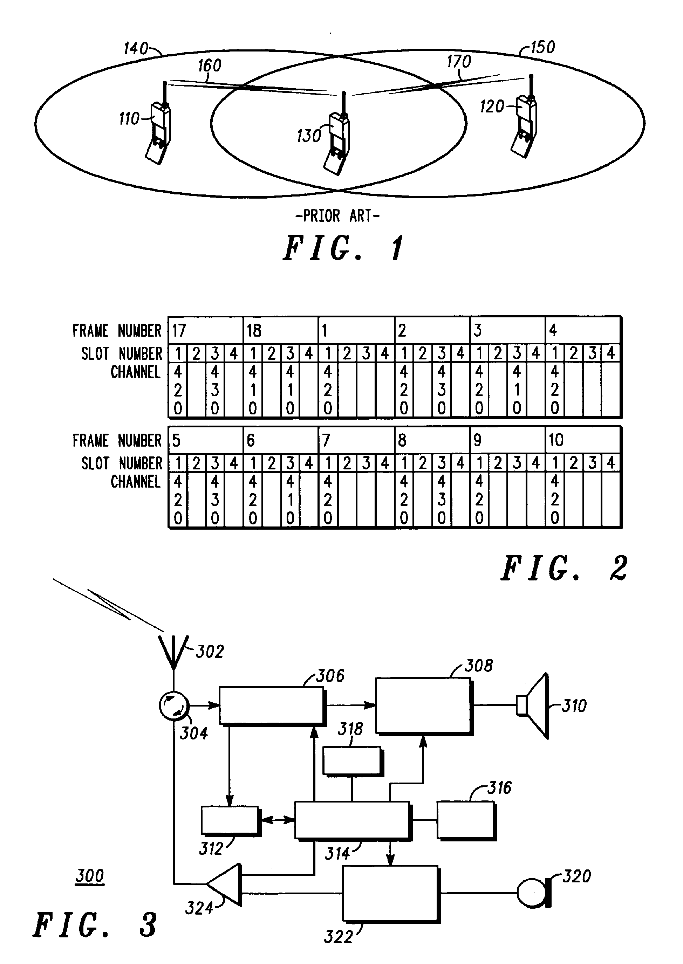

Referring to FIG. 1, a known DMO communication system 100 is shown that highlights the problematic "hidden terminal" scenario. A first MS 110 and a second MS 120, having effective coverage areas 140 and 150 respectively, transmit over the air interface to other MS. A third MS 130 receives simultaneously transmission 140 produced by MS 110 and transmission 150 produced by MS 120. This results in interfered and unrecoverable signals being received at the antenna of MS 130. MS 130 is therefore termed as a "terminal in the middle" whilst MS 110 and MS 120 are defined as "hidden terminals" i.e. they are operating outside of the receiving range of each other.

In a true DMO communication system, many MSs will be able to communicate at any instant in time, with three MSs 110, 120, 130 shown in FIG. 1 for clarity purposes only. Therefore, the aforementioned problem relating to communication to/from the third MS 130 is likely to be magnified many times in a practical situation.

An embodiment of the present invention is described as follows with reference to the TETRA DMO standard. However, it is within the contemplation of the invention that the inventive concepts described herein apply to any other wireless direct mode communication system.

Furthermore, although the TETRA DMO timing structure will be referred to, it is within the contemplation of the invention that any number of alternative timing configurations would benefit from the inventive concepts described herein.

Referring now to FIG. 2, the TETRA timing structure uses a TDMA access protocol as shown. The timing structure is arranged in super-frames, with each super-frame comprising eighteen (rolling) time frames. Time frames seventeen to ten are shown with each frame divided into four timeslots.

Every direct communication requires two out of four possible timeslots in a frame, where one timeslot is employed for user data delivery and the second timeslot is used for channel control signalling purposes. In DMO, the MS (mobile station) that originates the transmission and controls the call transaction is referred as the call "master". Each MS that receives the information, and participates in the call, is termed a call "slave".

As shown in FIG. 2, every first timeslot of the TDMA frame in frames 1-17 is dedicated to carry user communicated information 420 (sometimes called also 'traffic'), e.g. speech. Every third timeslot in certain TDMA frames is dedicated either to control information 410, transmitted by the call master to the call slaves, or to control information 430 transmitted by the call slaves to the call master, e.g. to interrupt its transmissions. The first timeslot in frame eighteen always carries control information 410.

In accordance with an embodiment of the present invention, call slaves will utilise any available timeslots, i.e. a timeslot not being used for traffic or control channel purposes. For example, the third timeslot in frames one, four, seven, nine and ten shown in FIG. 2; transmit a signalling beacon to indicate the channel status.

In particular, during an ongoing call transaction, call slave MSs that belong to the DMO talk-group engaged in the call are configured to randomly send 'beacon signals' during these available timeslots. In this manner, any hidden MS may be alerted to the fact that the DMO channel is being utilised. The hidden MSs are outside the receiving range of the master MS's transmitted signal and therefore may not be able to receive the direct transmissions from the call master in the talk-group, in order to recognise that an on-going call transaction is in progress. A random nature of the beacon signal is preferred owing to the fact that, in practice, there will be a group of users where one serves as a master communicating to a number of slave units.

Therefore, any deterministic method of signalling beacon transmissions utilised by several slave units, will lead to multiple collisions of the signalling beacons. A beacon signal generation strategy is therefore desirable to set a balance between minimisation of collisions and reliability for a "hidden" MS to actually receive the beacon signal in a given time period when monitoring the communication resource, i.e. a particular timeslot on a frequency channel.

Turning now to FIG. 3, a block diagram of a MS 300, adapted to support the inventive concepts of embodiments of the present invention is shown. The MS 300 includes an antenna 302 preferably coupled to a duplex filter, antenna switch or circulator 304 that provides isolation between receive and transmit chains within the MS 300.

The receiver chain includes scanning receiver front-end circuitry 306 (effectively providing reception, filtering and intermediate or base-band frequency conversion). The scanning front-end circuitry 306 is serially coupled to a signal processing function 308.

A controller 314 controls operations of the MS 300 and is coupled to the circuitry 306 and the signal processing function 308.

The controller 314 may calculate receive bit-error-rate (BER) or frame-error-rate (FER) or similar link-quality measurement data from received signals via a received signal strength indication (RSSI) 312 function. The RSSI 312 function is operably coupled to the scanning front-end circuit 306. The memory device 316 stores various forms of MS-specific data, such as decoding/encoding functions and the like, as well as link quality measurement information to enable an optimal communication link to be selected.

A timer 318 is operably coupled to the controller 314 to control the timing of operations, namely the transmission or reception of time-dependent signals, within the MS 300. In the context of the present embodiment of the present invention, the timer 318 will be used to synchronise beacon signal transmissions from the MS 300 in the desired number of available timeslots.

Furthermore, in accordance with an embodiment of the invention, the signal processing function 308 has been adapted under control of the controller 314 to make the determination on which timeslots the MS 300 should transmit in.

As known in the art, an output from the signal processing function 308 is typically provided to a suitable output device 310, such as a speaker or visual display unit (VDU).

The transmit chain essentially includes an input device 320, such as a microphone, coupled in series through transmitter modulation circuitry 322 and a power amplifier 324. The transmitter modulation circuitry 322 and the power amplifier 324 are operationally responsive to the controller 314, with an output from the power amplifier 324 coupled to the duplex filter or circulator 304, in a manner known in the art.

Of course, the various components within the MS 300 can be realised in discrete or integrated component form, with an ultimate structure therefore being merely an arbitrary selection.

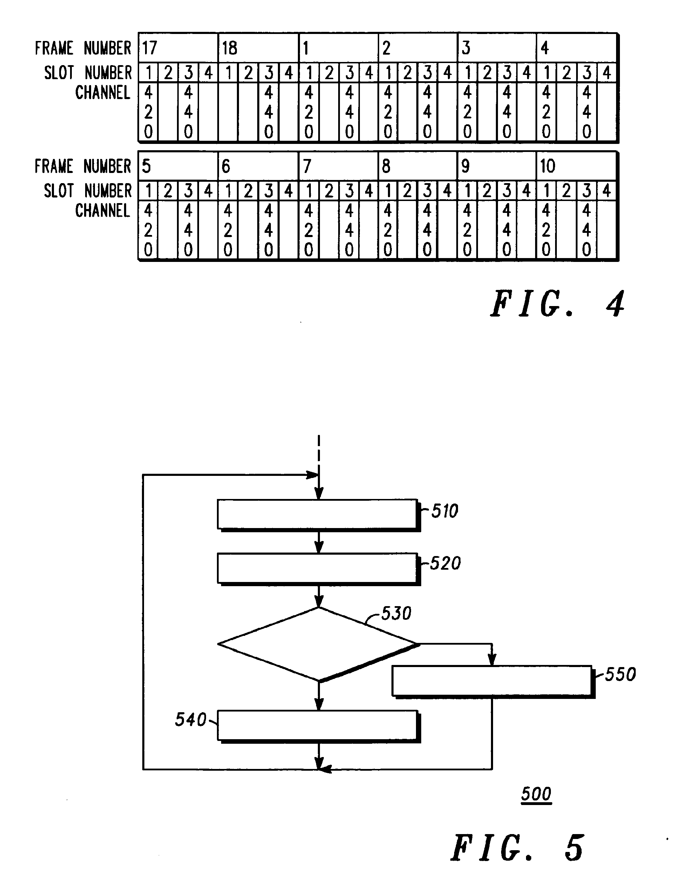

Referring now to FIG. 4, a timing diagram employing an embodiment of the present invention is shown. The slave MSs in the talk-group have been adapted to transmit randomly the 'beacon signals', within a pre-determined timeslot in a series of frames. The slave MSs are further adapted to determine how many other slaves are listening to the master MS.

Let us assume, for example, that a slave MS aims to send four beacon signals, in a period of eighteen frames, to alert any possible hidden MS. Referring to FIG. 5, let us further assume that, for simplicity, the slave MS is allowed to generate a signalling beacon in all eighteen frames; that is send control transmissions as beacon signals in time slots 440, in FIG. 4. In this case, the slave MS may use every opportunity, according to its internal strategy, for sending the beacon signal. In this context, the meaning of 'opportunity' relates to a valid timeslot to send the beacon signal by the slave MS.

If a single slave MS is monitoring transmissions from the master MS, it can randomly transmit a beacon signal with a probability of 4/18 in a particular frame. However, if there were N slave MSs listening to the master and every one of them transmits with a probability of 4/18, then the probability that more than one slave MS transmits in the same beacon signal slot 440 rapidly approaches one. This scenario clearly results in a high probability of a collision, thereby decreasing the probability of the 'hidden terminal' of correctly decoding any information contained within the beacon (as described later in a further enhanced embodiment).

In accordance with a preferred embodiment of the present invention, this collision scenario is alleviated using the method illustrated in flowchart 500 of FIG. 5. A slave MS randomly transmits a beacon signal, as shown in step 510. Notably, slaves that are not transmitting the beacon signal are configured to listen to any signalling timeslot 440 where they are not transmitting, as in step 520. By listening to these timeslots 440, the slave MS is able to estimate the average number of transmissions (from other MSs) per frame. If the estimated number exceeds a target probability in step 530, then the listening slave MSs will individually decrease their individual probability (frequency/rate) of transmitting a beacon signal, as shown in step 540. However, if the number is below a target probability, the listening slave MSs increase their individual probability (frequency/rate) of transmission, as shown in step 550.

Such a new procedure to adapt the individual probability of transmission for slave MSs, as shown in step 540 and step 550 enables the numbers of collisions to be reduced. There can be several ways of accomplishing this. A preferred embodiment of the present invention achieves this adaptation using an algorithm defined as follows.

Let N be the total number of slaves in a talk-group. The number N is, for example, unknown to the individuals forming the talk-group. Let us denote $p_t$ as the overall target probability of a beacon signal in any given slot. If a single slave MS were to transmit, it could for example draw a uniformly distributed random number x between '0' and '1'. In summary, if $x \leq p_t$, then the slave transmits. If $x > p_t$, the slave refrains from transmitting in the beacon signalling slot.

Since the slave MS is not in general aware of how many other slave MSs are in the talk-group, it listens to the channel for a number of frames 'F'. In response to this listening process, the slave MS, either through a decoding of messages or through simple energy detection, counts the number of active beacon slots. The counting process preferably includes the transmissions that it has made.

Let us further assume that during the period 'F', 's' beacon signalling slots are active. The slave then derives an estimated overall probability (pest) as:

$$P_{est} = s/F \qquad\qquad -\text{Equation}[1]$$

Every F frames, slave(i) updates its probability $p_{slave}(i)$ according to the following expression:

$$p_{slave}(i) = p_{slave}(i-1) + \alpha(p_t - p_{est})$$

$$-Equation\ [2]$$

where $\alpha$ is a positive adaptation constant and $p_{slave}(i-1)$ is its individual probability of transmission during the previous period.

It is noteworthy that when $p_t > p_{est}$, the target is larger than the estimation. Then the probability of transmission in the next period 'F' increases. When $p_t < p_{est}$, the target is smaller than the estimation. Then the probability of transmission in the next period 'F' decreases.

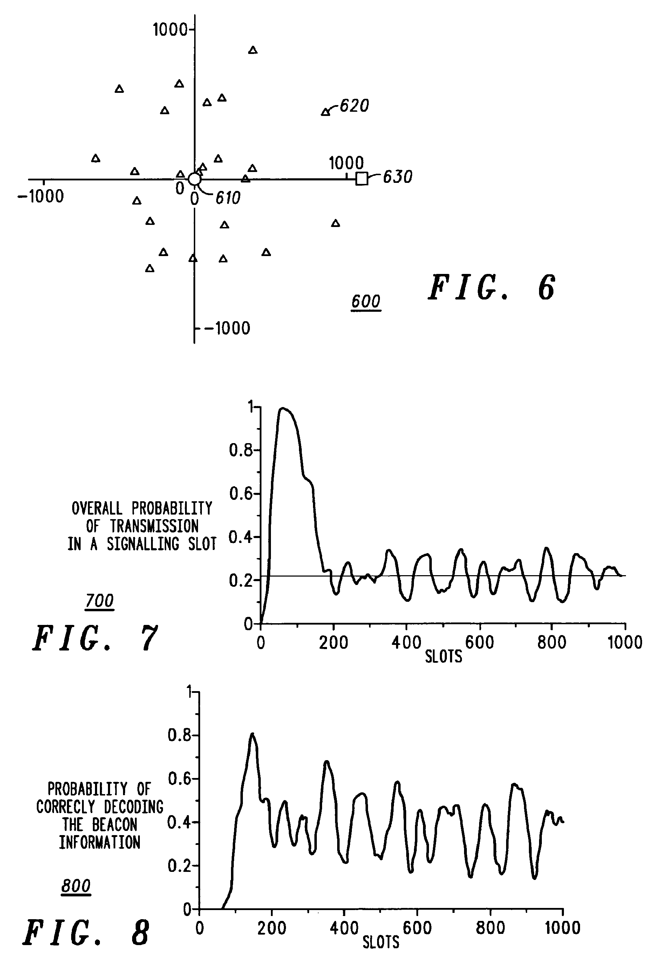

The inventors of the present invention have demonstrated the suitability of this algorithm by carrying out a simulation, as described below. The example communication scenario applied in the simulation includes a talk-group composed of a master MS 610 and 25 slave MSs 620, as shown in FIG. 6. It is assumed that the master MS 610 transmits at a power level of +30 dBm. Furthermore, there is one 'hidden terminal' MS 630, outside the transmitting range of the master MS 610. It is further assumed that the path loss (PL) between a transmitting MS and a receiving MS is governed by the relationship:

$$PL\ (dB) = 40 + 30\log_{10}(d) \qquad Equation\ [3]$$

where d is the distance in metres between the slave MS and the master MS.

It is further assumed, in this example, that the sensitivity of the receiver of an MS is -100 dBm 9 a typical sensitivity). Using this in conjunction with the transmit power and the path loss, it can easily be shown that the effective listening distance of the slave MSs is about 1000 metres. Now, let us assume that a 'hidden terminal' MS 630 is located at a distance of 1100 metres from the master MS 610, i.e. the 'hidden terminal' is not within range of transmissions from the master MS 610.

Let us also assume that the target probability of transmission in a beacon timeslot is equal to: $p_t = 4/18$, i.e. transmitting signalling beacons in four out of the eighteen frames. Initially, all the slave units 620 start with $p_{slave}(i) = 4/18$. 'F', the number of frames to estimate Pest, is taken to be '18'. $\alpha$, the adaptation constant in Equation [2] above, is set to approximately '0.05'. This value has been selected to ensure stability and consistency in the convergence, as well as to avoid any major affect of instantaneous fluctuations in the estimate. It is envisaged that in other implementations a different value for $\alpha$ may be selected.

The results of the simulation are illustrated in graph 700 of FIG. 7, where the overall probability of transmission in a signalling slot is plotted against the number of slots. Referring now to FIG. 7, it is shown how the overall probability of transmitting in a 'beacon-signalling slot' progresses over time for the scenario illustrated in FIG. 6. Initially, all the slave MSs start transmitting with a high probability, as dictated by the initial conditions. As the slave MSs continue to monitor the beacon signalling timeslots, as described above, the slave MSs assess the overall transmission rate of the beacon signal. With this information, the slave MSs estimate the probability of a successful transmission. In effect, at the outset, the slave MSs will reduce their individual probabilities to converge to the average target probability.

The simulation illustrated in FIG. 7 takes into account the relative distances between the slave MSs. That is, if the distance between a slave MS 'A' and slave MS 'B' is larger than 1000 metres in our example, slave 'B' will not be able to detect that slave 'A' is transmitting. In this regard, slave 'B' will underestimate the overall number of transmissions. The simulations show that, even taking this effect into account, the system reaches a steady-state balance around the target probability.

An interesting point to consider is how well the 'hidden terminal' MS 630 in FIG. 6 is able to understand that the communication resource (channel) is being used. The 'hidden terminal' is not able to listen to the master MS. Furthermore, it is also not able to listen to transmissions from slave MSs that are at a distance greater than a given distance from its location, e.g. greater than 1000 metres, in the example of FIG. 6.

Let us assume that when two slave MSs transmit beacon signals simultaneously, the hidden terminal 630 is able to decode the information if one of the slave MSs is within 'listening distance' of the hidden terminal 630 and the signal from the second slave MS is attenuated by more than the required carrier to interference ratio (C/I) for the particular modulation scheme used.

Assuming a C/I of 17 dB, the evolution of the probability that the hidden terminal correctly decodes the information in the beacon slot has also been simulated by the inventors of the present invention. The simulation results are presented in graph 800 of FIG. 8. Referring now to FIG. 8, the results of the simulation are illustrated, where the overall probability of transmission in a signalling slot is plotted against the number of slots. As shown, the 'hidden terminal' is not able to decode correctly the information during the initial period. This is due to the number of collisions in the channel, as depicted in FIG. 7. As the number of collisions decreases, the probability, in this example, converges to a value in the approximate range of 0.1 to 0.3.

In effect, this means that if the 'hidden' terminal listens to the channel for several frames, for example ten to twenty frames, the probability that it will decode correctly a 'beacon signal' indicating that the channel is being used will converge to be close to '1'.

In accordance with an enhanced embodiment of the present invention, the inventors have proposed a further enhanced procedure. In this regard, the inventors of the present invention have recognised that beacon signal transmissions by the slave MSs that are in a close proximity to the master MS contribute less to the hidden terminal problem than those slave MSs at a greater distance away from the master MS. The reason for this is that the slave MSs that are proximal to the master MS transmit over substantially the same coverage area. In contrast, those slave MSs that are distal from the master MS cover greater areas outside of the coverage range of the master's transmitted signal.

Therefore, the transmission probabilities may be different for different slave populations according to the received signal strength of the master MS's signal transmissions, as detected by the respective slave MS. Therefore, the slave MSs that are at a greater distance from the master MS are adapted to produce the beacon signal with a higher probability than those slave units that are closer to the master unit, thereby reducing the number of collisions and making the proposed mechanism even more efficient.

In the aforementioned scenario, where a group of slave MSs is expected to receive the call, there is no such presence check mechanism. Hence, the master MS is not aware if any of its group members are capable of receiving the call, unless it receives a voice confirmation reply to the transmission.

However, in accordance with the enhanced embodiment of the present invention, it is envisaged that the master MS may listen to the beacon channel as well. In this regard, the master MS may detect an ongoing transmission from one or more of its group members on the beacon channel. The detection of an ongoing transmission from one or more of its group members acting as slave MSs provides the master MS with an indication about the availability of its members within its coverage range.

Furthermore, it is envisaged that the beacon signal may carry unique identification of each slave MS transmitting MS its respective beacon signal. This provides the advantage that the master MS is then able to deduce the identity of particular group members that are within coverage range.

Additionally, in an embodiment of the present invention, the beacon signal preferably contains specific information allowing the receiving slave MSs to synchronise reliably in frequency and time. In this regard, a frequency synchronisation waveform may be, for example, a particular form of sinusoidal signal transmitted at a pre-defined and known frequency. Similarly, time synchronisation data may be in the form of a pre-defined sequence of bits or symbols located at a certain location within one or more timeslots. This information will allow the receivers to adjust their internal reference frequency to synchronise correctly with the transmission originators.

Given that slave MSs that generate the beacon signal are by their very nature synchronised to the master MS, propagation of the master reference signal may advantageously be propagated throughout the DMO network. Notably, the propagation of a synchronisation signal will also carry beyond the effective coverage range of the master MS. Furthermore, the propagation of synchronisation information will not be limited to a single DMO group.

When a first MS as master MS finishes sending a DMO communication to other MSs acting as slave MSs and one of the other MSs is then to send a communication at least to the first MS, that other MS becomes the master MS and the first MS becomes a slave MS and the collision avoidance procedure described above begins again with the first MS sending beacon signals.

It will be understood that the wireless communication system, wireless communication unit and method of avoiding collisions embodying the invention, as described above, provide at least the following advantages:

(i) The transmission of random beacon signals enables other wireless slave MSs to recognise that a DMO communication is in progress. With this information, the other slave MSs will refrain from trying to use the communication resource, thereby avoiding creating collisions with the existing communication;

(ii) A randomisation mechanism for transmitting the beacon signal has been provided that further reduces any collisions between slave MSs transmitting the beacon signal;

(iii) As the wireless slave units estimate a number of other wireless slave units that are transmitting signalling beacons, they can optimise their respective signalling beacon transmissions, to reduce the probability of collisions of the signalling beacons;

(iv) An enhanced algorithm has been described to take into account a slave unit's location relative to the master unit, thereby providing a balance between too few signalling beacon transmissions to inform other slave units, or too many transmissions that collide and thereby fail to provide an accurate indication of the communication activity on the communication channel;

(v) A slave unit identification capability has been included to indicate to the master the identity of its group members who are able to receive the master unit's transmissions; and

(vi) By provision of a synchronisation mechanism within the signalling beacon transmission, propagation of synchronised transmissions can be achieved throughout the DMO communication system, even to communication units on the periphery and beyond the coverage range of the master unit's transmission.

Thus, a communication system, a communication unit and method of avoiding collisions have been provided wherein the disadvantages associated with prior art arrangements have been substantially alleviated.

## Claims

1. A communication system comprising a plurality of mobile wireless communication terminals that are operable to communicate with one another either directly or via an intermediary communicating terminal, wherein the communication system includes a mobile communication terminal (300, 610) capable of being configured as a primary communication terminal for communications on a time divided communication resource directly with one or more secondary communication terminals, the one or more of the secondary mobile communication terminals (620) being operable to transmit beacon signals during available time periods of the time divided communication resource, whilst receiving a communication in a direct mode from the primary communication terminal (610), to inform other mobile communication terminals (630) not participating in the call that the communication resource is being utilized, **characterised in that** each of the one or more of the secondary terminals (620) is operable to monitor beacon transmissions from other secondary terminals receiving the communication, to estimate a rate of beacon transmissions being made from the secondary terminals, and to increase or reduce its rate of transmitting the beacon signals according to whether the estimated rate is respectively below or above a target rate.

2. The communication system according to Claim 1, wherein the secondary mobile communication terminal (620) is operable to transmit the beacon signals in available time periods selected in a random manner, thereby reducing a risk of collision with beacon signal transmission from one or more other secondary mobile terminals.

3. The communication system according to claim 1 or claim 2 wherein the time divided communication resource includes consecutive frames each comprising a plurality of time slots and the secondary terminal (620) is operable to transmit the beacon signals during available time slots.

4. The communication system according to claim 3 wherein the secondary terminal is operable to monitor beacon transmissions from other secondary terminals during available time slots when it is not transmitting the beacon signals and to estimate over several frames an average number of beacon signals made per frame from secondary terminals.

5. The communication system according to any one of the preceding claims, wherein each of said estimates is made by decoding a signal energy, or a message contained within an identifier of said transmitting secondary communication terminal of said one or more beacon signals.

6. The communication system according to any one of the preceding claims, wherein each secondary communication terminal is operable to monitor a received signal quality or strength of signal from the primary mobile communication terminal (300, 610), and to adjust the target rate of transmitting its respective beacon signal in response to said monitored received signal strength or quality.

7. The communication system according to any one of the preceding claims, wherein the secondary terminal is operable such that said beacon signal transmissions are configured to provide synchronisation information for other secondary communication terminals.

8. A mobile wireless communication terminal (300) for communicating with a plurality of other mobile wireless communication terminals on a time divided communication resource in a direct communication mode, the communication terminal comprising:

a transmitter (322, 324, 302) for transmitting a wireless signal on the time divided resource;
a receiver (302, 306, 308) for receiving wireless signals from other transmitters transmitting on the time divided resource; and
a processor (308), operably coupled to said transmitter and said receiver;

wherein the processor (308) is operable to initiate from the transmitter transmission of beacon signals during available time periods of the time divided communication resource, whilst the receiver is receiving a communication in a direct mode from a primary communication terminal (610), to inform other mobile communication terminals (630) not participating in the call that the communication resource is being utilized, **characterised in that** the receiver is operable to monitor beacon transmissions from other secondary terminals receiving the communication from the primary terminal, the processor is operable to estimate from the monitoring a rate of beacon transmissions being made from the secondary terminals, and to increase or reduce the rate of the transmitter transmitting the beacon signals according to whether the estimated rate is respectively below or above a target rate.

9.  The wireless communication terminal according to Claim 8, wherein the one or more beacon signals are transmitted in available time periods selected in a random manner, thereby reducing a risk of collision with transmission of beacon signals of more than one signalling beacon signals from other secondary mobile communication terminals.

10. The wireless communication terminal according to claim 8 or claim 9, wherein the terminal is also operable as a primary mobile communication terminal in a direct communication mode with one or more other mobile communication terminals acting as secondary terminals.

11. The terminal according to claim 10 wherein when the processor is operable, when detecting from received beacon signals that a given resource is in use, to use an alternative resource to begin communication as a primary mobile communication terminal in a direct communication mode.

12. A method (500) of operation in a communication system comprising: a primary mobile communication terminal (610) sending a communication on the time divided communication resource directly to secondary mobile communication terminals (620), each of the secondary terminals (620) transmitting beacon signals during available time periods of the time divided communication resource, whilst receiving the communication in a direct mode from the primary communication terminal (610), to inform other mobile communication terminals (630) not participating in the call that the communication resource is being utilized, **characterised by** each of the secondary terminals monitoring beacon transmissions from other secondary terminals receiving the communication from the primary terminal, estimating a rate of beacon transmissions being made from the secondary terminals, and increasing or reducing its rate of transmitting the beacon signal according to whether the estimated rate is respectively below or above a target rate.

13. The method according to claim 12 wherein the time divided communication resource includes consecutive frames each comprising a plurality of time slots and the secondary terminal (620) transmits the beacon signals during available time slots.

14. The method according to claim 13 wherein the secondary terminal (620) monitors beacon transmissions from other secondary terminals during available time slots when it is not transmitting the beacon signals and estimates over several frames an average number of beacon signals made per frame from the secondary terminals.

15. The method according to any one of the preceding claims 12 to 14, wherein each of said estimates is made by decoding a signal energy, or a message contained within an identifier of said transmitting secondary communication terminal of said one or more beacon signals.

16. The method according to any one of the preceding claims 12 to 15, wherein each secondary communication terminal monitors a received signal quality or strength of signal from the primary mobile communication terminal (300, 610), and adjusts the target rate of transmitting its respective beacon signal in response to said monitored received signal strength or quality.

17. A terminal according to any one of claims 8 to 11 which is operable in accordance with the Terrestrial Trunked Radio Direct Mode of Operation, abbreviated as TETRA DMO, standard.

**Patentansprüche**

1.  Kommunikationssystem mit mehreren drahtlosen Kommunikationsanschlüssen, die so betrieben werden können, dass sie entweder direkt oder über einen zwischengeschalteten Kommunikationsanschluss miteinander kommunizieren, wobei das Kommunikationssystem einen mobilen Kommunikationsanschluss (300, 610) umfasst, der geeignet ist, als primärer Kommunikationsanschluss für eine direkte Kommunikation mit einem oder mehreren sekundären Kommunikationsanschlüssen auf einer Zeitmultiplex-Kommunikationsressource konfiguriert zu sein, wobei einer oder mehrere der sekundären Kommunikationsanschlüsse (620) so betrieben werden können, dass er/sie während der verfügbaren Zeitspannen der Zeitmultiplex-Kommunikationsressource Bakensignale sendet/senden, während er/sie in einem Direktmodus eine Kommunikation von dem primären Kommunikationsanschluss (610) empfängt/empfangen, um andere Kommunikationsanschlüsse (630), die nicht and dem Anruf beteiligt sind, zu informieren, dass die Kommunikationsressource genutzt wird, **dadurch gekennzeichnet, dass** jeder unter dem einen bzw. den mehreren Kommunikationsanschlüssen (620) so betrieben werden kann, dass er Bakenübertragungen von weiteren sekundären Anschlüssen überwacht, die die Kommunikation empfangen, eine von den sekundären Anschlüssen erfolgende Bakensenderate schätzt und seine Bakensignalsenderate danach steigert oder verringert, ob die geschätzte Rate jeweils niedriger oder höher als eine Sollrate ist.

2. Kommunikationssystem nach Anspruch 1, bei dem der sekundäre mobile Kommunikationsanschluss (620) so betrieben werden kann, dass er die Bakensignale in den nach dem Zufallsprinzip ausgewählten, verfügbaren Zeitspannen sendet, wodurch die Gefahr einer Kollision mit Bakensignalübertragungen von einem oder mehreren sekundären mobilen Anschlüssen verringert wird.

3. Kommunikationssystem nach Anspruch 1 oder 2, bei dem die Zeitmultiplex-Kommunikationsressource aufeinander folgende Rahmen umfasst, die jeweils mehrere Zeitfenster umfassen, und der sekundäre Anschluss (620) so betrieben werden kann, dass er die Bakensignale während der verfügbaren Zeitfenster sendet.

4. Kommunikationssystem nach Anspruch 3, bei dem der sekundäre Anschluss so betrieben werden kann, dass er in verfügbaren Zeitfenstern Bakenübertragungen von anderen sekundären Anschlüssen überwacht, wenn er die Bakensignale nicht sendet, und über mehrere Rahmen eine durchschnittliche Anzahl an von sekundären Anschlüssen pro Rahmen erzeugten Bakensignalen schätzt.

5. Kommunikationssystem nach einem der vorhergehenden Ansprüche, bei dem jede der Schätzungen durch Decodieren einer Signalenergie oder einer in einer Kennung des das eine bzw. die mehreren Bakensignale sendenden sekundären Kommunikationsanschlusses enthaltenen Nachricht erfolgt.

6. Kommunikationssystem nach einem der vorhergehenden Ansprüche, bei dem jeder sekundäre Kommunikationsanschluss so betrieben werden kann, dass er die Signalqualität oder-stärke eines von dem primären mobilen Kommunikationsanschluss (300, 610) empfangenen Signals überwacht und die Sollrate für das Senden seines jeweiligen Bakensignals als Reaktion auf die überprüfte Stärke oder Qualität der empfangenen Signale einstellt.

7. Kommunikationssystem nach einem der vorhergehenden Ansprüche, bei dem der sekundäre Anschluss so betrieben werden kann, dass die Bakensignalübertragungen so konfiguriert sind, dass sie Synchronisationsinformationen für andere sekundäre Kommunikationsanschlüsse liefern.

8. Mobiler, drahtloser Kommunikationsanschluss (300) zum Kommunizieren mit mehreren anderen mobilen, drahtlosen Kommunikationsanschlüssen auf einer Zeitmultiplex-Kommunikationsressource in einem Direktkommunikationsmodus, wobei der Kommunikationsanschluss umfasst:

   einen Sender (322, 324, 302) zum Senden eines drahtlosen Signals auf der Zeitmultiplex-Ressource,
   einen Empfänger (302, 306, 308) zum Empfangen drahtloser Signale von anderen Sendern, die auf der Zeitmultiplex-Ressource senden, und
   einen Prozessor (308), der operativ mit dem Sender und dem Empfänger gekoppelt ist,

   wobei der Prozessor (308) so betrieben werden kann, dass er während der verfügbaren Zeitspannen der Zeitmultiplex-Kommunikationsressource ein Senden von Bakensignalen durch den Sender initiiert, während der Empfänger im Direktmodus eine Kommunikation von einem primären Kommunikationsanschluss (610) empfängt, um andere mobile Kommunikationsanschlüsse (630), die nicht an dem Anruf beteiligt sind, zu informieren, dass die Kommunikationsressource benutzt wird; **dadurch gekennzeichnet, dass** der Empfänger so betrieben werden kann, dass er Bakenübertragungen von anderen sekundären Anschlüssen überwacht, die die Kommunikation von dem primären Anschluss empfangen, der Prozessor so betrieben werden kann, dass er anhand der Überwachung eine von den sekundären Anschlüssen erfolgende Bakenübertragungsrate schätzt, und die Rate des die Bakensignale sendenden Senders abhängig davon, ob die geschätzte Rate jeweils unter oder über einer Sollrate liegt, erhöht oder verringert.

9. Drahtloser Kommunikationsanschluss nach Anspruch 8, bei dem das eine bzw. die mehreren Bakensignale in nach dem Zufallsprinzip ausgewählten, verfügbaren Zeitspannen gesendet werden, wodurch die Gefahr einer Kollision mit Übertragungen von Bakensignalen unter mehr als einem Signalbakensignal von anderen sekundären, mobilen Kommunikationsanschlüssen verringert wird.

10. Drahtloser Kommunikationsanschluss nach Anspruch 8 oder 9, bei dem der Anschluss auch in einem direkten Kommunikationsmodus mit einem oder mehreren anderen mobilen Kommunikationsanschlüssen, die als sekundäre Anschlüsse fungieren, als primärer mobiler Kommunikationsanschluss betrieben werden kann.

11. Anschluss nach Anspruch 10, bei dem der Prozessor so betrieben werden kann, dass er bei der Feststellung, dass eine gegebene Ressource verwendet wird, anhand der empfangenen Bakensignale eine alternative als Ressource verwendet, um als primärer, mobiler Kommunikationsanschluss in einem Direktkommunikationsmodus eine Kommunikation einzuleiten.

12. Verfahren (500) für den Betrieb in einem Kommunikationssystem, das umfasst:

einen primären, mobilen Kommunikationsanschluss (610), der auf der Zeitmultiplex-Kommunikationsressource eine Kommunikation direkt an sekundäre, mobile Kommunikationsanschlüsse (620) sendet, wobei jeder der sekundären Anschlüsse (620) während der verfügbaren Zeitspannen der Zeitmultiplex-Kommunikationsressource Bakensignale sendet, während er die Kommunikation in einem Direktmodus von dem primären Kommunikationsanschluss (610) empfängt, um die anderen mobilen Anschlüsse (630), die nicht an dem Anruf beteiligt sind, zu informieren, dass die Kommunikationsressource benutzt wird, **dadurch gekennzeichnet, dass** jeder der sekundären Anschlüsse Bakenübertragungen von anderen sekundären Anschlüssen überwacht, die die Kommunikation von dem primären Anschluss empfangen, die von den sekundären Anschlüssen erfolgende Bakenübertragungsrate schätzt und seine Bakensignalübertragungsrate abhängig erhöht oder verringert, ob die geschätzte Rate jeweils unter oder über einer Sollrate liegt.

13. Verfahren nach Anspruch 12, bei dem die Zeitmultiplex-Kommunikationsressource aufeinander folgende Rahmen umfasst, die jeweils mehrere Zeitfenster umfassen, und der sekundäre Anschluss (620) die Bakensignale während der verfügbaren Zeitfenster sendet.

14. Verfahren nach Anspruch 13, bei dem der sekundäre Anschluss (620) während der verfügbaren Zeitfenster Bakenübertragungen von anderen, sekundären Anschlüssen überwacht, wenn er keine Bakensignale sendet, und über mehrere Rahmen eine durchschnittliche Anzahl an pro Rahmen von den sekundären Anschlüssen erfolgten Bakensignalen schätzt.

15. Verfahren nach einem der Ansprüche 12 bis 14, bei dem jede der Schätzungen durch Decodieren einer Signalenergie oder einer in einer Kennung des das eine oder die mehreren Bakensignale sendenden sekundären Kommunikationsanschlusses enthaltenen Nachricht erfolgt.

16. Verfahren nach einem der Ansprüche 12 bis 15, bei dem jeder sekundäre Kommunikationsanschluss die Signalqualität bzw. -stärke eines von dem primären, mobilen Kommunikationsanschluss (300, 610) empfangenen Signals überwacht und die Sollrate für das Senden seines jeweiligen Bakensignals nach Maßgabe der festgestellten Stärke bzw. Qualität der überwachten, empfangenen Signale einstellt.

17. Anschluss nach einem der Ansprüche 8 bis 11, der gemäß dem Terrestrial Trunked Radio Direct Mode of Operation abgekürzt TETRA DMO, betrieben werden kann.

## Revendications

1. Système de communication comprenant une pluralité de terminaux de communication sans fil mobiles qui sont aptes à communiquer entre eux, soit directement, soit via un terminal de communication intermédiaire, le système de communication incluant un terminal de communication mobile (300, 610) pouvant être configuré en tant que terminal de communication principal pour effectuer des communications directement avec un ou plusieurs terminaux de communication secondaires, sur une ressource de communication à répartition temporelle, le ou les terminaux de communication mobiles secondaires (620) étant aptes à émettre des signaux balises pendant des périodes temporelles disponibles de la ressource de communication à répartition temporelle, tout en recevant une communication en mode direct depuis le terminal de communication principal (610), pour informer d'autres terminaux de communication mobiles (630) ne participant pas à la communication que la ressource de communication est en cours d'utilisation, **caractérisé en ce que** chacun du ou des terminaux secondaires (620) est apte à surveiller les émissions de signaux balises provenant d'autres terminaux secondaires recevant la communication, à estimer une cadence d'émissions de signaux balises par les terminaux secondaires, et à augmenter ou réduire sa cadence d'émission des signaux balises selon que la cadence estimée est respectivement inférieure ou supérieure à une cadence cible.

2. Système de communication selon la revendication 1, dans lequel le terminal de communication mobile secondaire (620) est apte à émettre les signaux balises pendant des périodes temporelles disponibles sélectionnées de manière aléatoire, ce qui réduit les risques de collision avec les émissions de signaux balises d'un ou plusieurs autres terminaux mobiles secondaires.

3. Système de communication selon la revendication 1 ou la revendication 2, dans lequel la ressource de communication à répartition temporelle comprend des trames consécutives comprenant chacune une pluralité de créneaux temporels et le terminal secondaire (620) est apte à émettre les signaux balises pendant des créneaux temporels disponibles.

4. Système de communication selon la revendication 3, dans lequel le terminal secondaire est apte à surveiller les émissions de signaux balises provenant d'autres terminaux secondaires pendant des créneaux temporels disponibles lorsqu'il n'est pas en train d'émettre les signaux balises et à estimer sur plusieurs trames un nombre moyen de signaux balises émis par trame par les terminaux secondaires.

5. Système de communication selon l'une quelconque des revendications précédentes, dans lequel chacune desdites estimations est effectuée par décodage d'une énergie de signal, ou d'un message contenu dans un identifiant dudit terminal de communication secondaire émetteur desdits un ou plusieurs signaux balises.

6. Système de communication selon l'une quelconque des revendications précédentes, dans lequel chaque terminal de communication secondaire est apte à surveiller la qualité ou l'intensité d'un signal reçu du terminal de communication mobile principal (300, 610), et à ajuster la cadence cible d'émission de son propre signal balise en réponse à ladite intensité ou qualité de signal reçu surveillée.

7. Système de communication selon l'une quelconque des revendications précédentes, dans lequel le terminal secondaire est apte à ce que lesdites émissions de signaux balises soient configurées de façon à fournir des informations de synchronisation pour les autres terminaux de communication secondaires.

8. Terminal de communication sans fil mobile (300) pour communiquer avec une pluralité d'autres terminaux de communication sans fil mobiles sur une ressource de communication à répartition temporelle, en mode de communication direct, le terminal de communication comprenant :

un émetteur (322, 324, 302) pour émettre un signal sans fil sur la ressource à répartition temporelle ;
un récepteur (302, 306, 308) pour recevoir des signaux sans fil provenant d'autres émetteurs émettant sur la ressource à répartition temporelle ; et
un processeur (308) couplé fonctionnellement audit émetteur et audit récepteur ;
le processeur (308) étant apte à initier l'émission de signaux balises par l'émetteur pendant des périodes de temps disponibles de la ressource de communication à répartition temporelle, tandis que le récepteur reçoit une communication en mode direct depuis un terminal de communication principal (610), pour informer d'autres terminaux de communication mobiles (630) ne participant pas à la communication que la ressource de communication est en cours d'utilisation, **caractérisé en ce que** le récepteur est apte à surveiller les émissions de signaux balises provenant d'autres terminaux secondaires recevant la communication du terminal principal, le processeur étant apte à estimer, à partir de la surveillance, une cadence d'émissions de signaux balises par les terminaux secondaires, et à augmenter ou réduire la cadence d'émission des signaux balises par l'émetteur selon que la cadence estimée est respectivement inférieure ou supérieure à une cadence cible.

9. Terminal de communication sans fil selon la revendication 8, dans lequel le ou les signaux balises sont émis pendant des périodes de temps disponibles sélectionnées d'une manière aléatoire, ce qui réduit les risques de collision avec les émissions de signaux balises de plus d'un signal de signalisation de balise d'autres terminaux de communication mobiles secondaires.

**10.** Terminal de communication sans fil selon la revendication 8 ou la revendication 9, dans lequel le terminal est également apte à fonctionner en tant que terminal mobile principal, en mode de communication direct avec un ou plusieurs autres terminaux de communication mobiles agissant comme des terminaux secondaires.

**11.** Terminal selon la revendication 10, dans lequel le processeur est apte, lorsqu'il détecte à partir de signaux balises reçus qu'une ressource donnée est en cours d'utilisation, à utiliser une autre ressource pour commencer une communication en tant que terminal de communication mobile principal en mode de communication direct.

**12.** Procédé (500) de fonctionnement dans un système de communication, comprenant les étapes selon lesquelles : un terminal de communication mobile principal (610) envoie une communication directement à des terminaux de communication mobiles secondaires (620), sur la ressource de communication à répartition temporelle, chacun des terminaux secondaires (620) émettant des signaux balises pendant des périodes de temps disponibles de la ressource de communication à répartition temporelle, tout en recevant la communication en mode direct depuis le terminal de communication principal (610), pour informer d'autres terminaux de communication mobiles (630) ne participant pas à la communication que la ressource de communication est en cours d'utilisation, **caractérisé en ce que** chacun des terminaux secondaires surveille les émissions de signaux balises provenant d'autres terminaux secondaires recevant la communication du terminal principal, estime une cadence d'émissions de signaux balises par les terminaux secondaires, et augmente ou réduit sa cadence d'émission des signaux balises selon que la cadence estimée est respectivement inférieure ou supérieure à une cadence cible.

**13.** Procédé selon la revendication 12, dans lequel la ressource de communication à répartition temporelle comprend des trames consécutives comprenant chacune une pluralité de créneaux temporels et le terminal secondaire (620) émet les signaux balises pendant des créneaux temporels disponibles.

**14.** Procédé selon la revendication 13, dans lequel le terminal secondaire (620) surveille les émissions de signaux balises provenant d'autres terminaux secondaires pendant des créneaux temporels disponibles lorsqu'il n'est pas en train d'émettre les signaux balises et estime sur plusieurs trames un nombre moyen de signaux balises émis par trame par les terminaux secondaires.

**15.** Procédé selon l'une quelconque des revendications précédentes 12 à 14, dans lequel chacune desdites estimations est effectuée par décodage d'une énergie de signal, ou d'un message contenu dans un identifiant dudit terminal de communication secondaire émetteur desdits un ou plusieurs signaux balises.

**16.** Procédé selon l'une quelconque des revendications précédentes 12 à 15, dans lequel chaque terminal de communication secondaire surveille la qualité ou l'intensité d'un signal reçu du terminal de communication mobile principal (300, 610), et ajuste la cadence cible d'émission de son propre signal balise en réponse à ladite intensité ou qualité de signal reçu surveillée.

**17.** Terminal selon l'une quelconque des revendications 8 à 11, qui est apte à fonctionner selon la norme de radiocommunications terrestres à ressources partagées en mode de fonctionnement direct, abrégée par TETRA DMO.

-PRIOR ART-

*FIG. 1*

| FRAME NUMBER | 17 | | | | 18 | | | | 1 | | | | 2 | | | | 3 | | | | 4 | | | |
|---|---|---|---|---|---|---|---|---|---|---|---|---|---|---|---|---|---|---|---|---|---|---|---|---|
| SLOT NUMBER | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4 |
| CHANNEL | 420 | | 430 | | 410 | | 410 | | 420 | | | | 420 | | 430 | | 420 | | 410 | | 420 | | | |

| FRAME NUMBER | 5 | | | | 6 | | | | 7 | | | | 8 | | | | 9 | | | | 10 | | | |
|---|---|---|---|---|---|---|---|---|---|---|---|---|---|---|---|---|---|---|---|---|---|---|---|---|
| SLOT NUMBER | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4 |
| CHANNEL | 420 | | 430 | | 420 | | 410 | | 420 | | | | 420 | | 430 | | 420 | | | | 420 | | | |

*FIG. 2*

300

*FIG. 3*

| FRAME NUMBER | 17 | | | | 18 | | | | 1 | | | | 2 | | | | 3 | | | | 4 | | | |
|---|---|---|---|---|---|---|---|---|---|---|---|---|---|---|---|---|---|---|---|---|---|---|---|---|
| SLOT NUMBER | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4 |
| CHANNEL | 420 | | 440 | | | | 440 | | 420 | | 440 | | 420 | | 440 | | 420 | | 440 | | 420 | | 440 | |

| FRAME NUMBER | 5 | | | | 6 | | | | 7 | | | | 8 | | | | 9 | | | | 10 | | | |
|---|---|---|---|---|---|---|---|---|---|---|---|---|---|---|---|---|---|---|---|---|---|---|---|---|
| SLOT NUMBER | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4 |
| CHANNEL | 420 | | 440 | | 420 | | 440 | | 420 | | 440 | | 420 | | 440 | | 420 | | 440 | | 420 | | 440 | |

*FIG. 4*

*FIG. 5*

500

FIG. 6

600

OVERALL PROBABILITY
OF TRANSMISSION
IN A SIGNALLING SLOT

700

FIG. 7

PROBABILITY OF
CORRECLY DECODING
THE BEACON
INFORMATION

800

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2309854 A